# EUROPÄISCHE PATENTSCHRIFT

(11) **EP 0 782 723 B1**
(45) Veröffentlichungstag und Bekanntmachung des Hinweises auf die Patenterteilung: **02.12.1998**
(21) Anmeldenummer: 95929763.1
(22) Anmeldetag: 06.09.1995
(51) Int. Cl.: G05D 1/02

(54) **FÜHRUNGSSYSTEM FÜR EIN SELBSTFAHRENDES FAHRZEUG MIT GETRENNTER, MOBILER SENDEEINRICHTUNG UND VERFAHREN ZUM STEUERN DES FAHRZEUGS**
GUIDE SYSTEM FOR AN AUTOMOTIVE VEHICLE WITH SEPARATE, MOBILE TRANSMITTER UNIT AND METHOD OF CONTROLLING THE VEHICLE
SYSTEME DE GUIDAGE POUR VEHICULE AUTOPROPULSE A DISPOSITIF EMETTEUR MOBILE SEPARE ET PROCEDE DE COMMANDE DU VEHICULE

(30) Priorität: 22.09.1994 DE 4433750
(43) Veröffentlichungstag der Anmeldung: 09.07.1997
(73) Patentinhaber: Bail, Günther, Dr., D-82491 Grainau (DE)
(72) Erfinder: Bail, Günther, Dr., D-82491 Grainau (DE)
(74) Vertreter: Flosdorff, Jürgen, Dr.
(86) Internationale Anmeldenummer: DE9501211
(87) Internationale Veröffentlichungsnummer: WO9609575

(56) Entgegenhaltungen:
- DE-C- 4 326 016
- US-A- 5 043 903
- US-A- 5 331 561
- PATENT ABSTRACTS OF JAPAN vol. 950 no. 005 & JP,A,07 114413 (SHINKO ELECTRIC CO LTD) 2.Mai 1995,
- PATENT ABSTRACTS OF JAPAN vol. 015 no. 352 (P-1248) ,6.September 1991 & JP,A,03 134715 (HITACHI CABLE LTD) 7.Juni 1991, in der Anmeldung erwähnt
- PATENT ABSTRACTS OF JAPAN vol. 017 no. 341 (P-1565) ,28.Juni 1993 & JP,A,05 046079 (PIONEER ELECTRON CORP) 26.Februar 1993, in der Anmeldung erwähnt

## Beschreibung

Die Erfindung betrifft ein Führungssystem für ein selbstfahrendes Fahrzeug, insbesondere Golfwagen, gemäß dem Oberbegriff des Patentanspruchs 1, wobei das Fahrzeug einer mobilen Sendeeinrichtung, die -im Anwendungsfall eines Golfwagens- von einem Golfspieler getragen wird, folgen und sich dieser bis auf einen vorgegebenen Abstand annähern kann. Die Erfindung ist aber auch auf andere Fahrzeuge anwendbar, die einer mobilen Sendeeinrichtung automatisch folgen sollen. Außerdem betrifft die Erfindung ein Verfahren gemäß dem Oberbegriff des Anspruchs 8.

In der DE-PS 43 26 016 ist ein selbstfahrendes Fahrzeug, vorzugsweise ein Golfwagen, offenbart, der eine Hochfrequenzpeileinrichtung und eine Ultraschallpeileinrichtung aufweist. Wenn der Golfwagen mittels Hochfrequenzpeilung die Richtung des Handsenders ermittelt hat, nähert er sich diesem auf geradliniger Bahn mit verhältnismäßig großer Geschwindigkeit, bis er in den Ultraschallpeilbereich gerät, in dem automatisch auf die Ultraschallpeilung und verringerte Geschwindigkeit umgeschaltet wird. Bei Erreichen eines vorbestimmten Minimalabstandes von dem Golfspieler bleibt der Golfwagen stehen.

Der vorbekannte Golfwagen hat sich in der Praxis bereits gut bewährt. Ein Nachteil des kombinierten Hochfrequenz- und Ultraschallpeilsystems liegt aber darin, daß der Golfwagen nicht exakt der Bahn folgt, die der Golfspieler mit dem Handsender vorgegeben hat, sondern sich dieser Bahn polygonal annähert, was je nach Beschaffenheit der Bahn nachteilig sein kann. Das selbstfahrende Fahrzeug könnte einer mobilen Sendeeinrichtung nicht entlang eines gewundenen, schmalen Weges folgen, sondern würde sich je nach Verlauf der Bahn nur seitlich an diesen Weg annähern können. Außerdem bietet das vorbekannte System nicht die Möglichkeit, bestimmte Geländebereiche für das selbstfahrende Fahrzeug zu sperren, da es beispielsweise in einen Teich hineinfahren würde, wenn sich der Handsender auf der anderen Seite des Teiches befände und das Signal "folgen" abgäbe.

Aus JP-Abstract 3-134715 A ist ein Golfwagen bekannt, der zwecks genauer Positionsbestimmung mit einem Satelliten-gesteuerten Positionierungssystem (GPS-System) ausgerüstet ist. Das GPS-System dient dazu, in einer Zentrale die Position von verschiedenen Golfwagen auf einem Display sichtbar zu machen.

Aus JP-Abstract 5-046079 A ist ebenfalls ein Golfwagen bekannt, der ein GPS-System aufweist, das dazu dient, unter Mithilfe eines periodischen Timers den vom Golfwagen zurückgelegten Weg in einem Speicher abzuspeichern und mittels Positionskoordinaten des Golfplatzes, die auf einer CD-Rom abgespeichert sind, die jeweiligen Positionen und zurückgelegten Strecken des Golfwagens auf einem Display darzustellen.

Aus der US-A-5 331 561 ist ein System bekannt, bei dem ein fahrerloses Fahrzeug einem Führungswagen in einem kurzen, vorbestimmten Abstand auf einer Straße folgt. Beide Fahrzeuge sind mit einem GPS-Empfänger ausgerüstet. Das Führungsfahrzeug ermittelt mit seitlichen Sensoren Seitenbereichsdaten, die durch den jeweiligen Abstand zwischen dem Fahrzeug und seitlichen Objekten wiedergegeben sind. Außerdem werden zu den jeweiligen Seitenbereichsdaten die Strecken gemessen, die bis dahin zurückgelegt wurden. Das Führungsfahrzeug übermittelt diese Daten an das nachfolgende Fahrzeug, das ebenfalls solche Seitenbereichsprofile ermittelt und diese Daten mit den übermittelten Daten vergleicht. Wenn Abweichungen vorliegen, wird der Kurs des nachfolgenden Fahrzeugs so korrigiert, daß die Seitenbereichsdaten wieder übereinstimmen.

Aus der US-A-5 043 903 ist ein System zur Unterstützung der Flugbewegungen von Helikoptern oder Flugzeugen bekannt, die in einer Formation fliegen. Dabei geht es um die Festlegung jedes Flugzeugs in dieser Formation und um die Beibehaltung der gegenseitigen Abstände der Flugzeuge.

Der vorliegenden Erfindung liegt die Aufgabe zugrunde, ein Führungssystem für ein selbstfahrendes Fahrzeug anzugeben, das eine exakte Führung gewährleistet. Außerdem soll ein Verfahren zum exakten Führen eines Fahrzeugs angegeben werden.

Diese Aufgaben werden erfindungsgemäß durch die in den Patentansprüchen 1 und 8 angegebenen Merkmale gelöst.

Vorteilhafte Weiterbildungen der Erfindung sind in den Unteransprüchen gekennzeichnet.

Gemäß der vorliegenden Erfindung weisen sowohl die mobile Sendeeinrichtung als auch das selbstfahrende Fahrzeug eine mit einem Rechner versehene Empfangs- und Auswerteeinrichtung für ein Satelliten-gesteuertes Positioniersystem auf. Dieses Satelliten-Positioniersystem enthält beispielsweise vier Satelliten, die gleichzeitig Signale aussenden, die von den Positionierungsempfängern aufgenommen und verarbeitet werden. Der Rechner der Empfangs- und Auswerteeinrichtungen ermittelt aus den aufgefangenen Signalen die Koordinaten der jeweiligen Position.

Die mobile Sendeeinrichtung sendet ihre Koordinaten an das Fahrzeug, dessen Rechner diese Signale in Informationen über die zu durchfahrende Wegstrecke umsetzt, d.h. die Richtung und die Entfernung zum Sender werden errechnet.

Demnach stehen das selbstfahrende Fahrzeug, vorzugsweise der Golfwagen, und die mobile Sendeeinrichtung, die ein Golfspieler bei sich führt, ständig mit den Satelliten eines Satellitennavigationssystems in Verbindung, und von der Spielperson aus erfolgt über eine Funkstrecke ein stetiger Datenaustausch zu dem Golfwagen hin, so daß dieser die jeweiligen Positionsdaten, d.h. die Richtung und den Abstand zu der mobilen Sendeeinrichtung, errechnen und speichern kann.

Wenn der Golfspieler an den Golfwagen das Signal "komm" abgibt, fährt der Golfwagen die gespeicherten Positionen ab, wobei er exakt der zuvor abgeschrittenen Bahn des Golfspielers folgt. Damit ist es möglich, daß ein Golfwagen beispielsweise einem weit vorauseilendem Golfspieler über eine schmale Brücke folgt, da die Bahn, die der Golfwagen durchfährt, im wesentlichen identisch mit derjenigen des Spielers ist.

Die mobile Sendeeinrichtung ist bevorzugt mit einem HF-Sender versehen, bei dem es sich um einen Handsender handeln kann. Mit diesem Handsender vermittelt ein Golfspieler in regelmäßigen Zeitabständen, bevorzugt im Ein-Sekunden-Takt, seine jeweilige Position an das Fahrzeug, dessen Rechner die Signale in die Daten umsetzt, die nachfolgend als Steuersignale für den Motor dienen, damit das Fahrzeug der Bahn der Sendeeinrichtung folgen kann.

Das Fahrzeug sollte mit Sensoren ausgestattet sein, mit dem es auf seinem Weg liegende Hindernisse erkennen kann. Die Sensoren können dabei Mikrowellen, Ultraschallwellen oder Infrarotwellen nutzen. Wenn ein in der Bahn liegendes Hindernis erfaßt wird, kann vorgesehen sein, daß das Fahrzeug auf einer vorgegebenen Bahn, die außer Reichweite des Hindernisses liegt, um dieses Hindernis herum fährt. Derartige Ausweichbahnen können als geeignete Kurvenscharen vorprogrammiert werden.

Wie bereits erwähnt, werden die über Funkstrecke dem Fahrzeug übermittelten Positionsdaten der Sendeeinrichtung (Golfspieler) im Rechner des Fahrzeugs gespeichert, bis das Fahrzeug ein START-Signal erhält. Es folgt dann exakt dem in kurzen Zeitintervallen punktweise gespeicherten Weg des mobilen Senders. Der Golfspieler kann dem Fahrzeug jederzeit ein HALT-Signal übermitteln, woraufhin dieses sofort stehen bleibt. Wenn ein solches Signal ausbleibt, nähert sich das Fahrzeug dem mobilen Sender (Golfspieler) bis auf einen vorgegebenen, von dem Golfspieler bevorzugt festsetzbaren Abstand, den das Fahrzeug (Golfwagen) automatisch einhält.

In weiterer Ausgestaltung der Erfindung kann zusätzlich eine feststehende Empfangs- und Auswerteeinrichtung für das Satelliten-gesteuerte Positioniersystem vorgesehen sein, das Korrektursignale an die mobile Sendeeinrichtung und/oder das Fahrzeug sendet. Da die Koordinaten dieser feststehenden Empfangs- und Auswerteeinrichtung festliegen, kann die Fehlerrate des Satellitennavigationssystems praktisch auf Null verringert werden, da mit Hilfe dieses sogenannten Differenzverfahrens die Positionsdaten der mobilen Sendeeinrichtung und des Fahrzeug auf das genaueste errechnet werden können. Die feststehende Empfangs- und Auswerteeinrichtung kann beispielsweise im Clubhaus eines Golfplatzes installiert sein.

Die Verwendung des stationären Referenzsenders ermöglicht es, bestimmte Bereiche, wie z.B. Bunker und Wasserlöcher eines Golfplatzes auszugrenzen, so daß der golfwagen diese Zonen nicht befährt. Wenn eine solche Zone von einem Golfspieler betreten wird, bleibt der Golfwagen am Rande des verbotenen Bereichs stehen, oder umfährt diese, um der Sendeeinrichtung zu folgen, wenn diese den verbotenen Bereich wieder verlassen hat.

Als Satellitennavigationssystem kann beispielsweise das amerikanische GBS-System (Global Positional System) verwendet werden, wobei zur Erhöhung der Genauigkeit der Positionsbestimmung ein weiteres Satellitennavigationssystem, beispielsweise das existierende russische Satellitennavigationsystem verwendet werden kann. Bei Verwendung eines Referenzsenders ist die Genauigkeit der Positonsbestimmung durch die "differenzielle Methode" so genau, daß eines der bestehenden Satellitennavigationssysteme hinreichend ist.

Das erfindungsgemäße Fahrzeug folgt dem mobilen Sender auf freiem Feld mit größter Genauigkeit auf der vorgegebenen Bahn, wenn der Sender keinen ausgegrenzten Bereich betritt, der für das Fahrzeug gesperrt ist. Damit ist das erfindungsgemäße Fahrzeug insbesondere, jedoch nicht ausschließlich als Golfwagen besonders gut geeignet.

Nachfolgend wird das erfindungsgemäße System anhand zweier Beispiele kurz erläutert. Dabei zeigen:
- Fig. 1: eine schematische Darstellung des Grundsystems und
- Fig. 2: eine schematische Darstellung eines Systems mit erhöhter Positionsgenauigkeit.

Die schematischen Figuren befassen sich mit dem Fall, daß das erfindungsgemäße System einen Golfwagen 1 betrifft, der einem Spieler 2 folgen soll. Die nicht-dargestellten Empfangs- und Auserteeinrichtungen des Golfwagens 1 und der mobilen Sendereinrichtung (ebenfalls nicht dargestellt) des Spielers 2 stehen mit einem aus mindestens vier Satelliten bestehenden Satellitensystem 3 in Verbindung und erhalten von dort Signale, die die Rechner der Empfangs- und Auswerteeinrichtungen in Positionsdaten wie Koordinaten umsetzen. Der HF-Sender des Spielers 2 sendet außrdem seine errechneten Positionsdaten an den Wagen 1, dessen Rechner die von dem Spieler erhaltenen Positionsdaten mit den eigenen Positionsdaten vergleicht und daraus Abstand und Richtung der jeweiligen Position des Spielers errechnet und speichert. Auf ein START-Signal des Spielers 2 hin fährt der Wagen 1 die gespeicherten Positionsdaten ab.

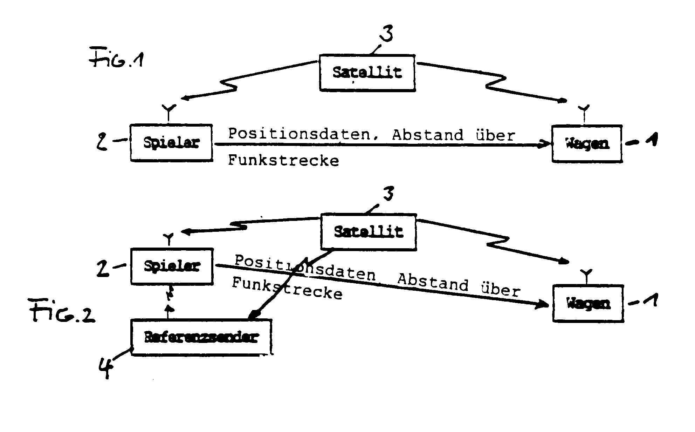

Das in Fig. 2 dargestellte System enthält zusätzlich einen stationären Referenzsender 4, der ebenfalls von dem Satellitensystem 3 Positionsdaten erhält, wodurch der Referenzsender durch Vergleich der erhaltenen Positionsdaten mit seinen feststehenden, bekannten exakten Positionsdaten Korrektur-Positionsdaten errechnen kann, die er an den Rechner des Fahrzeugs 1 und des mobilen Senders 2 weiterleitet. Damit können diese ihre exakten Positionsdaten errechnen.

Die Empfangs- und Auswerteeinrichtung des Fahrzeugs 1 erhält die -korrigierten- Positionsdaten des Spielers 2, so daß der Rechner des Fahrzeugs Richtung und Abstand vom Spieler errechnen kann. Diese Werte werden im Abstand von 1 s gespeichert.

Wenn das Fahrzeug 1 ein START-Signal von dem Spieler erhält, folgt es der gespeicherten Bahn, bis es sich auf einen vorgegebenen Abstand dem Spieler angenähert hat. In diesem Abstand bleibt das Fahrzeug selbsttätig stehen.

Es liegt im Rahmen der Erfindung, daß das Fahrzeug 1 dem Spieler 2 auch ohne Empfang eines START-Signals folgt, wenn der Abstand zwischen Fahrzeug und Spieler eine vorgegebene, einstellbare Mindeststrecke übersteigt.

## Patentansprüche

1. Führungssystem für ein selbstfahrendes Fahrzeug, insbesondere Golfwagen, wobei das selbstfahrende Fahrzeug eine Antriebseinrichtung, eine Steuereinrichtung und eine Signalempfangseinrichtung aufweist, und eine mobile Sendeeinrichtung vorgesehen ist, die Positionssignale an das Fahrzeug abgeben kann, damit das Fahrzeug ihr folgt, wobei die mobile Sendeeinrichtung und das selbstfahrende Fahrzeug jeweils eine mit einem Rechner versehene Empfangs- und Auswerteeinrichtung für ein Satelliten-gesteuertes Positioniersystem aufweisen,
**gekennzeichnet durch** eine stationäre Empfangs- und Auswerteeinrichtung (4) für das Satelliten-gesteuerte Positioniersystem, die Korrektursignale an die mobile Sendereinrichtung (2) und/oder das Fahrzeug (1) abgibt.

2. Führungssystem nach Anspruch 1,
dadurch gekennzeichnet, daß die mobile Sendeeinrichtung mit einem HF-Handsender versehen ist.

3. Führungssystem nach Anspruch 1 oder 2,
dadurch gekennzeichnet, daß die mobile Sendeeinrichtung (2) vorzugsweise einmal pro Sekunde ein ihre Position bezeichnendes Signal an das Fahrzeug (1) sendet.

4. Führungssystem nach einem der Ansprüche 1 bis 3,
dadurch gekennzeichnet, daß das Fahrzeug (1) Sensoren aufweist, mit dem es Hindernisse auf seinem Weg erfaßt.

5. Führungssystem nach Anspruch 4,
dadurch gekennzeichnet, daß die Sensoren Mikrowellen- und/oder Ultraschall- und/oder Infrarotsender sind.

6. Führungssystem nach einem der Ansprüche 1 bis 5,
dadurch gekennzeichnet, daß ein Speicher der Empfänger- und Auswerteeinrichtung des Fahrzeugs (1) die von dem mobilen Sender (2) erhaltenen Positionssignale speichert, bis das Fahrzeug (1) diese Positionen durchfährt.

7. Führungssystem nach einem der Ansprüche 1 bis 6,
dadurch gekennzeichnet, daß in dem Rechner des Fahrzeugs (1) die absoluten Koordinaten von Bereichen gespeichert sind, die für das Fahrzeug (1) gesperrt sind.

8. Verfahren zum Steuern eines selbstfahrenden Fahrzeugs, vorzugsweise eines Golfwagens, damit dieses automatisch einer sich bewegenden Sendeeinrichtung folgen und sich dieser bis auf einen vorgegebenen Abstand nähern kann, wobei das Fahrzeug und die bewegliche Sendeeinrichtung von einem Satellitensystem in vorgegebenen Zeitintervallen ausgesandte Signale empfangen und daraus ihre jeweiligen Positionen berechnen und die bewegliche Sendeeinrichtung jeweils diese Positionen bezeichnende Positionssignale an das Fahrzeug sendet, das diese Positionen speichert, und wobei das Fahrzeug auf ein Signal hin die gespeicherten Positionen abfährt,
dadurch gekennzeichnet, daß die bewegliche Sendeeinrichtung und/oder das Fahrzeug außerdem Positionssignale von einem feststehenden Referenzsender erhalten und daß sie daraus ihre korrigierten, exakten Positionsdaten ermitteln.

9. Verfahren nach Anspruch 8,
dadurch gekennzeichnet, daß sich das Fahrzeug nur bis auf eine vorgegebene Entfernung dem beweglichen Sender nähert.

10. Verfahren nach Aspruch 8 oder 9,
dadurch gekennzeichnet, daß das Fahrzeug die Koordinaten von gesperrten Bereichen speichert und dann, wenn abzufahrende Positionen durch einen gesperrten Bereich führen, diesen Bereich umfährt.

## Claims

1. A guide system for an automotive vehicle, in particular a golf caddy, wherein the automotive vehicle comprises a drive device, a control device and a signal receiving device, and wherein there is provided a mobile transmitting device which can transmit position signals to the vehicle so that said vehicle can follow the device, said mobile transmitting device and said automotive vehicle being each provided with a a receiving and evaluating device equipped with a computer for a satellite-controlled positioning system,
**characterized by** a stationary receiving and evaluating device (4) for said satellite-controlled positioning system which sends correction signals to said mobile transmitting device (2) and/or said vehicle (1).

2. The guide system according to claim 1,
characterized in that said mobile transmitting device is provided with a high-frequency hand-held transmitter.

3. The guide system according to claim 1 or 2,
characterized in that said mobile transmitting device (2) transmits, preferably once each second, a signal indicative of its position to said vehicle (1).

4. The guide system according to any one of claims 1 to 3,
characterized in that said vehicle (1) comprises sensors for sensing obstacles positioned along its path.

5. The guide system according to claim 4,
characterized in that the sensors are microwave and/or ultrasonic and/or infrared transmitters.

6. The guide system according to any one of claims 1 to 5,
characterized in that a memory of the receiving and evaluating device of the vehicle (1) stores the position signals received from said mobile transmitter (2) up to the time when the vehicle (1) travels through the positions.

7. The guide system according to any one of claims 1 to 6,
characterized in that the absolute coordinates of areas banned for said vehicle (1) are stored in the computer of said vehicle (1).

8. A method for controlling an automotive vehicle, preferably a golf caddy, so that the vehicle can automatically follow a moving transmitting device and can approach the device up to a predetermined distance, wherein the vehicle and the mobile transmitting device receive signals sent by a satellite system at predetermined time intervals, and calculate their respective positions therefrom, and wherein the mobile transmitting device respectively transmits position signals indicative of said positions to the vehicle which stores said positions, and wherein said vehicle follows the stored positions upon a signal,
characterized in that said mobile transmitting device and/or said vehicle further receive position signals from a stationary reference transmitter and that they determine their corrected, exact position data therefrom.

9. The method according to claim 8, characterized in that the vehicle approaches the mobile transmitter only up to a predetermined distance.

10. The method according to claim 8 or 9,
characterized in that the vehicle stores the coordinates of forbidden areas and circumvents such an area when positions to be traveled lead through a forbidden area.

## Revendications

1. Système de guidage pour un véhicule sans chauffeur, notamment pour un véhicule de golf, le véhicule sans chauffeur comportant un dispositif moteur, un dispositif de commande et un dispositif récepteur de signaux, et un dispositif émetteur mobile étant prévu pour donner au véhicule des signaux de position afin que le véhicule suive ce dispositif émetteur mobile, le dispositif émetteur mobile et le véhicule sans chauffeur comportant chacun un dispositif de réception et d'évaluation muni d'un ordinateur pour un système de positionnement commandé par satellite,
caractérisé par un dispositif de réception et d'évaluation stationnaire (4) qui est destiné au système de positionnement commandé par satellite et qui donne des signaux de correction au dispositif émetteur mobile (2) et/ou au véhicule (1).

2. Système de guidage selon la revendication 1, caractérisé en ce que le dispositif émetteur mobile est muni d'un émetteur manuel à fréquences radioélectriques.

3. Système de guidage selon la revendication 1 ou 2, caractérisé en ce que le dispositif émetteur mobile (2) envoie au véhicule (1), de préférence une fois par seconde, un signal indiquant sa position.

4. Système de guidage selon l'une des revendications 1 à 3, caractérisé en ce que le véhicule (1) comporte des capteurs avec lesquels il détecte des obstacles sur son chemin.

5. Système de guidage selon la revendication 4, caractérisé en ce que les capteurs sont des émetteurs de micro-ondes et/ou d'ultrasons et/ou d'infrarouges.

6. Système de guidage selon l'une des revendications 1 à 5, caractérisé en ce qu'une mémoire du dispositif de réception et d'évaluation du véhicule (1) mémorise les signaux de position reçus de l'émetteur mobile (2) jusqu'à ce que le véhicule (1) passe par ces positions.

7. Système de guidage selon l'une des revendications 1 à 6, caractérisé en ce que sont mémorisées dans l'ordinateur du véhicule (1) les coordonnées absolues de zones qui sont interdites au véhicule (1).

8. Procédé de commande d'un véhicule sans chauffeur, de préférence d'un véhicule de golf, pour que celui-ci puisse suivre automatiquement un dispositif émetteur qui se déplace et puisse s'approcher de ce dispositif émetteur jusqu'à une certaine distance prédéterminée, le véhicule et le dispositif émetteur mobile recevant des signaux émis à intervalles de temps prescrits par un système avec satellite et calculant à partir de là leurs positions respectives et le dispositif émetteur mobile émettant à chaque fois des signaux de position indiquant ces positions vers le véhicule qui mémorise ces positions et le véhicule parcourant, à la suite d'un signal, les positions mémorisées,
caractérisé en ce que le dispositif émetteur mobile et/ou le véhicule reçoivent en outre des signaux de position provenant d'un émetteur de référence stationnaire et déterminent à partir de là leurs données de position corrigées exactes.

9. Procédé selon la revendication 8, caractérisé en ce que le véhicule s'approche de l'émetteur mobile seulement jusqu'à une certaine distance prédéterminée.

10. Procédé selon la revendication 8 ou 9, caractérisé en ce que le véhicule mémorise les coordonnées de zones interdites, et, lorsque le chemin direct vers les positions à parcourir traverse une zone interdite, cette zone est contournée.
